# EUROPEAN PATENT APPLICATION

(11) **EP 4 838 656 A1**
(43) Date of publication of application: **11.11.2026**
(21) Application number: 25194476.5
(22) Date of filing: 07.08.2025
(51) Int. Cl.: H01M 50/204, H01M 50/249, H01M 50/264, B60K 1/04, B66F 9/075, B60L 50/64

(54) **HOLD DOWN PLATE FOR A BATTERY TRAY**

(30) Priority: 05.05.2025 US 202519198637; 06.08.2025 US 202563679799 P
(71) Applicant: Trojan Battery Company LLC, Santa Fe Springs, CA 90670 (US)
(72) Inventor: JACOBS, James Anthony, Santa Fe Springs, 90670 (US); SILVA, Cliff Joseph, Santa Fe Springs, 90670 (US)
(74) Representative: Leonhard, Frank Reimund

(57) **Abstract**

A hold down plate for a battery powered vehicle includes a planar portion; a centrally located flange extending perpendicular to the planar portion and configured to mount the hold down plate; a corner flange extending perpendicular to the planar portion and configured to secure a battery within a battery tray; and a retaining portion extending from the planar portion and configured to secure adjacent batteries within the battery tray.

## Description

### CROSS REFERENCE TO RELATED APPLICATIONS

This application claims the benefit of United States Provisional Patent Application No. 63/679,799, filed August 6, 2024, the entire contents of which is incorporated by reference for all purposes as if fully set forth herein.

### BACKGROUND

The present disclosure relates to battery packaging. More specifically, the present disclosure relates to a hold down plate that is used in conjunction with a battery tray to prevent movement of monoblock batteries within the battery tray.

Powered pallet jacks, also known as electric pallet trucks, walkies, or power jacks, are motorized to allow lifting and moving of heavier and stacked pallets by a single operator. Power to powered pallet jacks is typically provided by on-board rechargeable batteries. Many models include maintenance-free batteries with a built-in battery charger.

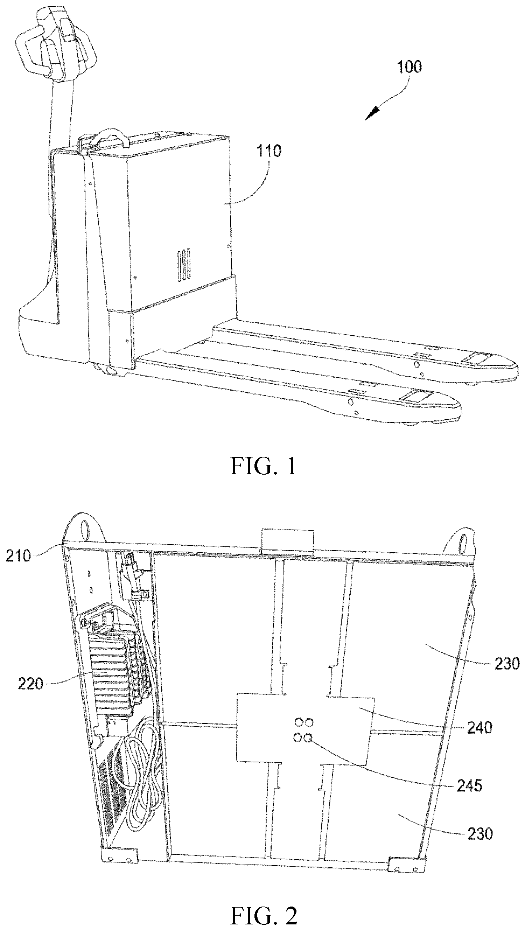

FIG. 1 shows an exemplary powered pallet jack 100 that includes a battery tray 110 for safely storing batteries, wiring, and a charging system. As shown, the battery tray 110 is mounted on a portion of the pallet jack 100 and is essentially a five-sided box. Here, the battery tray 110 is typically made from steel to protect the internal batteries, wiring, and charging components from impact and environmental damage.

FIG. 2 is a view of a conventional battery tray 210 through the open (i.e., sixth) side showing internal features of electrical components 220 and an array of four batteries 230 secured in place with a hold down plate 240. As shown, the hold down plate 240 extends from the top to the bottom of the battery tray 210 and is bolted in place via four centrally located bolts 245. As seen, the hold down plate 240 completely covers the central space between the left and right side batteries 230.

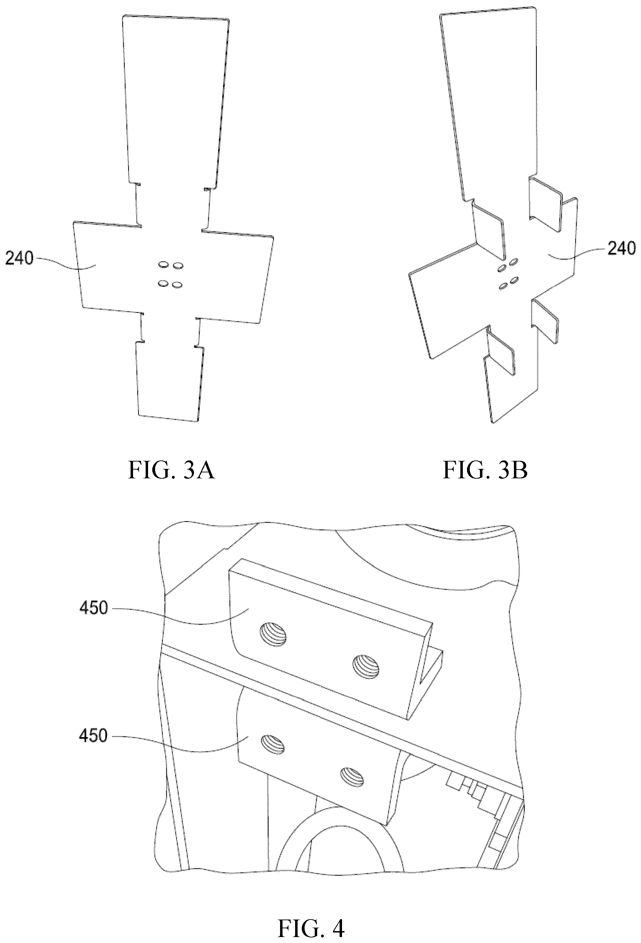

FIGS. 3A and 3B are views of the hold down plate 240 removed from the battery tray 210. FIG. 4 is a close view of two L-shaped brackets 450 that are centrally mounted on a shelf or flange within the battery tray 210 and used to bolt on the hold down plate 240.

A less expensive hold down plate that provides access to the battery wiring and terminals without having to be removed is desirable.

### SUMMARY OF THE DISCLOSURE

To overcome the problems described above, embodiments of the present disclosure include a hold down plate including a planar portion; a centrally located flange extending perpendicular to the planar portion and configured to mount the hold down plate; a corner flange extending perpendicular to the planar portion and configured to secure a battery within a battery tray; and a retaining portion extending from the planar portion and configured to secure adjacent batteries within the battery tray.

In an aspect, the centrally located flange is defined by a folded three-sided cutout portion of the planar portion.

In an aspect, the centrally located flange is defined by attaching a separate piece to the hold down plate.

In an aspect, the corner flange is defined by folding back a cutout portion of the hold down plate.

In an aspect, the corner flange is defined by attaching a separate piece to the hold down plate.

In an aspect, the centrally located flange includes a feature to mount the hold down plate to the battery tray.

In an aspect, the battery tray is configured to attach to a battery powered vehicle.

In an aspect, when the hold down plate is mounted to the battery tray, the corner flange constrains a battery to prohibit the battery from shifting within the battery tray.

In an embodiment, a battery powered vehicle include a hold down tray as described.

In another embodiment, a battery tray assembly includes a battery tray; a battery within the battery tray; and a hold down plate attached to the battery tray and including: a planar portion; a centrally located flange extending perpendicular to the planar portion and configured to mount the hold down plate to the battery tray; a corner flange extending perpendicular to the planar portion and configured to secure the battery within the battery tray; and a retaining portion extending from the planar portion and configured to secure adjacent batteries within the battery tray.

In an aspect, the battery tray has an open side.

In an aspect, the battery tray assembly further includes an electrical component within the battery tray.

In an aspect, the battery tray is configured to attach to a battery powered vehicle.

In an aspect, the battery powered vehicle is a pallet truck.

In an aspect, the hold down plate extends less than an entirety of the open side to hold the battery within the battery tray.

In an aspect, the corner flange is four corner flanges each configured to constrain a corresponding battery to prohibit that battery from shifting within the battery tray.

In an embodiment, a battery powered vehicle includes the battery tray assembly.

The above and other features, elements, characteristics, steps, and advantages of the present invention will become more apparent from the following detailed description of preferred embodiments of the present invention with reference to the attached drawings.

### BRIEF DESCRIPTION OF THE DRAWINGS

FIG. 1 is a view of a pallet truck.
FIG. 2 is a view of a battery tray of the pallet truck.
FIG. 3A and FIG. 3B are views of a hold down plate for the battery tray.
FIG. 4 shows mounting features for the hold down tray.
FIG. 5 is of a battery tray according to an embodiment of the disclosure.
FIG. 6 is another view of the battery tray of FIG. 5.
FIG. 7 is a closer view of the battery tray of FIG. 5.
FIG. 8 and FIG. 9 are different perspective views of a hold down plate according to an embodiment of the disclosure.

### DETAILED DESCRIPTION

Reference will now be made in detail to embodiments of the present disclosure, examples of which are illustrated in the accompanying drawings. Whenever possible, the same reference numerals will be used throughout the drawings to refer to the same or like parts. However, this disclosure may be embodied in many different forms and should not be construed as limited to the embodiments set forth herein.

Directional terms as used herein - for example up, down, right, left, front, back, top, bottom, vertical, horizontal - are made only with reference to the figures as drawn and are not intended to imply absolute orientation.

Unless otherwise expressly stated, it is in no way intended that any method set forth herein be construed as requiring that its steps be performed in a specific order, nor that with any apparatus, specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an," and "the" include plural references unless the context clearly dictates otherwise. Thus, for example, reference to "a" component includes aspects having two or more such components, unless the context clearly indicates otherwise.

In the following description, reference is made to the accompanying drawings that form a part thereof, and in which is shown by way of illustrating specific exemplary embodiments in which the disclosure may be practiced. These embodiments are described in sufficient detail to enable those skilled in the art to practice the concepts disclosed herein, and it is to be understood that modifications to the various disclosed embodiments may be made, and other embodiments may be utilized, without departing from the scope of the present disclosure. The following detailed description is, therefore, not to be taken in a limiting sense.

Disclosed is a hold down plate for coupling to a battery tray and retaining batteries in the battery tray. The hold down plate can secure the batteries from shifting side-to-side and from falling out of the battery tray. The battery tray can be a structure that retains batteries for powering a vehicle. For example, the vehicle can be a pallet truck. The disclosed hold down plate is configured to reduce the number of parts of existing hold down plates and provide access to wiring and components in the battery tray that conventional hold down plates do not provide.

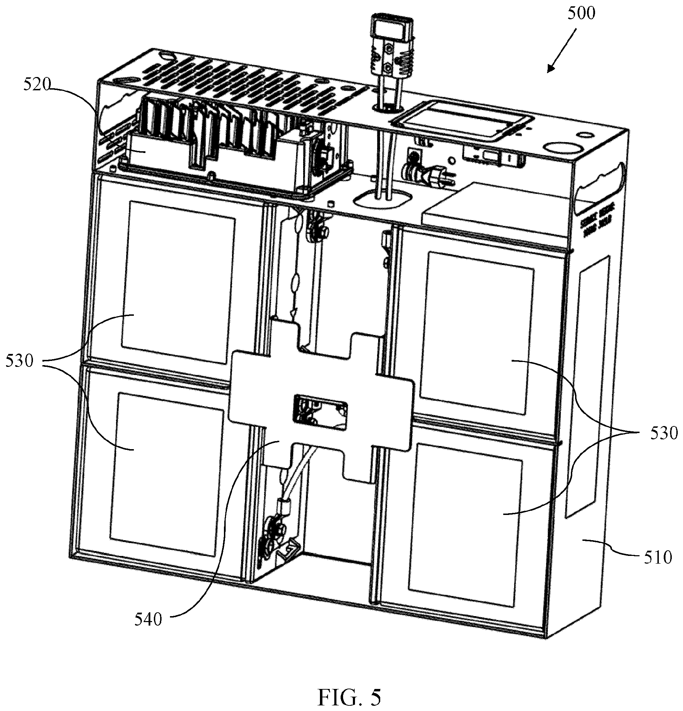

FIG. 5 shows a battery tray assembly 500 according to an embodiment of the present disclosure. As shown, the battery tray assembly 500 can include a battery tray 510, electrical components 520, an array of batteries 530, and a hold down plate 540.

In an embodiment, the battery tray 510 can be a five-sided box with one of the major sides open to expose the electrical components 520, wiring, and batteries 530 inside. The electrical wiring can be configured to
(i) provide power from the batteries 530 to the power input of a pallet truck or another vehicle in which the battery tray assembly 500 is mounted, and
(ii) recharge the batteries 530 from another power source. The hold down plate 540 can be configured to attach to a shelf, bracket, or other suitable structure inside the battery tray 510.
As shown, the hold down plate 540 does not cover the entire central space between the left and right side batteries 530 to provide maintenance access and airflow between the batteries 530.

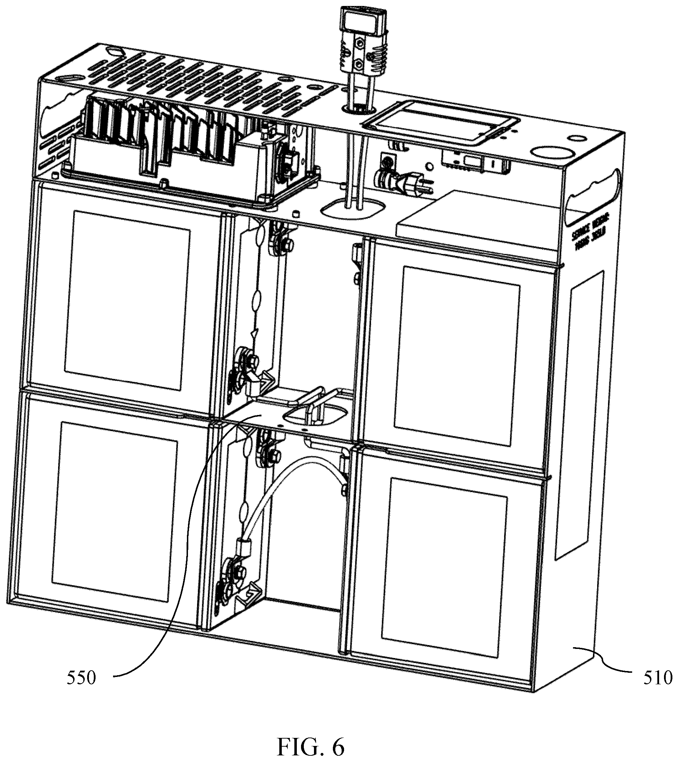

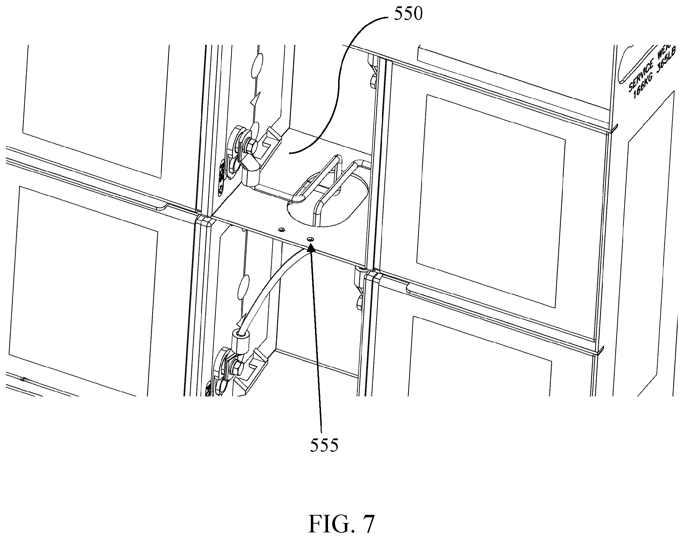

FIG. 6 is a view of the battery tray assembly 500 similar to that of FIG. 5 but with the hold down plate 540 removed. This view shows a shelf 550 extending across the battery tray 510 that is used to attach the hold down plate 540. FIG. 7 is a closer view showing the shelf 550 and holes 555 that are used to secure the hold down plate 540 to the shelf 550. The holes 555 can be threaded to accept a correspondingly threaded fastener used to secure the hold down plate 540 to the shelf 550.

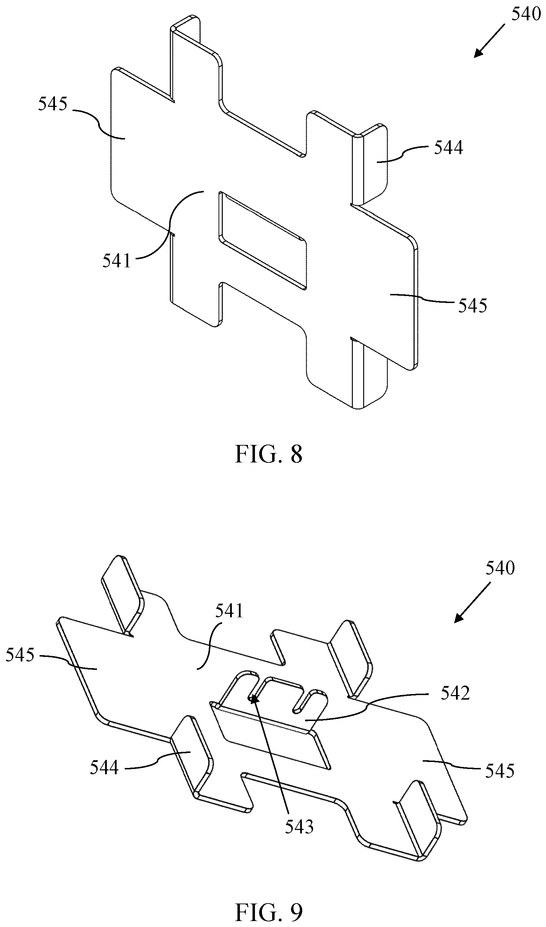

FIGS. 8 and 9 are two different perspective views of the hold down plate 540. The hold down plate 540 can be made from steel, an alloy, sheet metal, composite, plastic, or any suitable material. The hold down plate 540 can be defined by cutting, stamping, machining, molding, or any suitable method.

As shown, the hold down plate 540 can include a central substantially planar portion 541 and defined to have cutouts and flanges. For example, the hold down plate 540 can include cutout portions at the center and the corners. A central portion of the hold down plate 540 can be cut out and defined such that a flange 542 extends substantially perpendicular to the planar portion 541. For example, the flange 542 can be defined by folding back a three-sided cutout portion or by attaching a separate piece of material. The flange 542 can also be configured to include through holes or slots 543 for mounting the hold down plate 540 to the battery tray 510.

Portions of the corners of the hold down plate 540 can be cut and defined such that a corner flange 544 extends substantially perpendicular to the planar portion 541. The corner flange 544 can be defined by folding back a cutout portion or by attaching a separate piece of material. Each corner region can include a corner flange 544. When the hold down plate 540 is mounted to the battery tray 510, each of the corner flanges 544 is configured to trap a corresponding battery 530 in position by restraining the relative movement of the battery 530 to the battery tray 510 to prohibit that battery 530 from shifting toward the space between batteries at the center of the battery tray 510 or out of the open side of the battery tray 510. Thus, the hold down plate 540 constrains the individual batteries 530 at corners of the batteries 530 from shifting in two directions while a shelf 550 or shelves 550 constrain the batteries 530 from shifting in a third direction relative to the battery tray 510.

The hold down plate 540 can also include opposing retaining portions 545 that extend from the planar portion 541. When the hold down plate 540 is mounted to the battery tray 510, each of the retaining portions 545 is configured to fit near or against two adjacent batteries 530 to retain those batteries 530 in the battery tray 510.

As disclosed, the hold down plate 540 and mounting is cheaper to manufacture, requires less parts, and provides greater battery tray access than that shown and described with respect to FIGS. 2 to 4.

It should be understood that the foregoing description is only illustrative of the present invention. Various alternatives and modifications can be devised by those skilled in the art without departing from the present invention. Accordingly, the present invention is intended to embrace all such alternatives, modifications, and variances that fall within the scope of the appended claims.

## Claims

1. **Hold down plate,** comprising:
a planar portion;
a centrally located flange extending perpendicular to the planar portion and configured to mount the hold down plate;
a corner flange extending perpendicular to the planar portion and configured to secure a battery within a battery tray;
and
a retaining portion extending from the planar portion and configured to secure adjacent batteries within the battery tray.

2. The hold down plate of claim 1, wherein the centrally located flange is defined by a folded three-sided cutout portion of the planar portion.

3. The hold down plate of one of claims 1 or 2, wherein the centrally located flange is defined by attaching a separate piece to the hold down plate.

4. The hold down plate of one of claims 1 to 3, wherein the corner flange is defined by folding back a cutout portion of the hold down plate.

5. The hold down plate of one of claims 1 to 4, wherein the corner flange is defined by attaching a separate piece to the hold down plate.

6. The hold down plate of one of claims 1 to 5, wherein the centrally located flange includes a feature to mount the hold down plate to the battery tray.

7. The hold down plate of one of claims 1 to 6, wherein the battery tray is configured to attach to a battery powered vehicle.

8. The hold down plate of one of claims 1 to 7, wherein when the hold down plate is mounted to the battery tray, the corner flange constrains a battery to prohibit the battery from shifting within the battery tray.

9. **Battery powered vehicle** including the hold down tray of claim 1.

10. **Battery tray assembly,** comprising:
a battery tray;
a battery within the battery tray; and
a hold down plate (540) attached to the battery tray and including:
a planar portion;
a centrally located flange extending perpendicular to the planar portion and configured to mount the hold down plate to the battery tray;
a corner flange extending perpendicular to the planar portion and configured to secure the battery within the battery tray; and
a retaining portion extending from the planar portion and configured to secure adjacent batteries within the battery tray.

11. The battery tray assembly of claim 10, wherein the battery tray has an open side.

12. The battery tray assembly of claim 10 or 11, further comprising an electrical component within the battery tray.

13. The battery tray assembly of one of claims 10 to 12, wherein the corner flange fits inside the battery to prohibit the battery from shifting within the battery tray.

14. The battery tray assembly of one of claims 10 to 13, wherein the battery tray is configured to attach to a battery powered vehicle.

15. The battery tray assembly of claim 14, wherein the battery powered vehicle is a pallet truck.

16. The battery tray assembly of one of claims 10 to 15, wherein the centrally located flange includes a feature to mount the hold down plate to the battery tray.

17. The battery tray assembly of one of claims 10 to 16, wherein the centrally located flange is defined by a folded three-sided cutout portion of the planar portion.

18. The battery tray assembly of one of claims 11 to 17, wherein the hold down plate extends less than an entirety of the open side to hold the battery within the battery tray.

19. The battery tray assembly of one of claims 10 to 18, wherein the corner flange is four corner flanges each configured to constrain a corresponding battery to prohibit that battery from shifting within the battery tray.

20. **Battery powered vehicle** including the battery tray assembly of one of claims 10 to 19.
